# EUROPEAN PATENT APPLICATION

(11) **EP 4 262 003 A2**
(43) Date of publication of application: **18.10.2023**
(21) Application number: 22206355.4
(22) Date of filing: 09.11.2022
(51) Int. Cl.: H01M 50/342, B65D 90/36

(54) **EXPLOSION PANEL HAVING INSULATION LAYER WHOSE THICKNESS IS ADJUSTABLE FOR ENERGY STORAGE SYSTEM**

(30) Priority: 11.04.2022 KR 20220044682
(71) Applicant: FDC Co., Ltd, Gyeongsangnam-do 50969 (KR)
(72) Inventor: Park, Jung Su, 50966 Gyeongsangnam-do (KR); Son, Jae Hyeun, 50966 Gyeongsangnam-do (KR)
(74) Representative: Gee, Steven William

(57) **Abstract**

The present invention suggests an explosion panel of an energy storage system. The explosion panel include a top disc (10) on which a rib flanges (20) coming into close contact. The explosion panel includes a body (30) having body flanges (32) coming into close contact with the underside of the top disc (10) and inner walls (34) of heights (H). And a lattice structure (36) is disposed on the lower portions of the inner walls (34) of the body (30). And insulation member (40) is disposed inside the inner walls (34) and supported against the lattice structure (36). The thickness of insulation member (40) is adjustable according to the changes of the heights (H) of the inner walls (34).

## Description

### Technical Field

The present invention relates to an explosion panel of an energy storage system (ESS), and more specifically, to an explosion panel of an energy storage system that is capable of adjusting the thickness of insulation layer, to provide optimal insulation performance.

### Background Art

In a system for generating energy such as solar power, for example, an energy storage system for storing the generated energy is necessarily installed. Generally, the energy storage system includes a container having a given dimension needed and a plurality of storage devices disposed inside the container to store the energy in the container.

Further, various devices are installed inside the container to build a stable environment needed for energy storage, and one of the devices is disclosed in Korean Patent No. 10-1381592 wherein various devices including an air conditioner are disposed to control internal temperature, moisture, and air conditions of the container.

Besides, the storage devices disposed inside the container may be very weak to fire and explosion, and accordingly, an explosion venting device has to be mounted to exhaust high pressure gas and flame to the outside if an abnormal event occurs inside the container. For example, if an abnormal event occurs inside the container for the energy storage system to cause high pressure, a top disc of an explosion panel bursts to allow the inside of the container to communicate with the outside thereof, so that a high pressure gas and flame generated from the inside of the container have to be exhausted to the outside.

As mentioned above, the container has to be insulated from external air so as to fully satisfy the internal temperature conditions of the container. In this case, the container itself has an insulation layer, but since the explosion panel does not have any insulation layer, desirably, the explosion panel is provided with an insulation layer for preventing heat conduction from occurring. Because external temperatures are different according to districts, more desirably, the insulation performance of the insulation layer has to be adjustable.

### Disclosure

### Technical Problem

Accordingly, the present invention has been made to solve the above-mentioned problems occurring in the related art, and it is an object of the present invention to provide an explosion panel of an energy storage system that is capable of having an insulation function so that an internal temperature of a container for the energy storage system is not influenced by an external temperature of the container.

It is another object of the present invention to provide an explosion panel of an energy storage system that is capable of easily adjusting the thickness of an insulation layer so that the insulation performance of the insulation layer is easily controlled.

It is yet another object of the present invention to provide an explosion panel of an energy storage system that is capable of minimizing amounts protruding outward (upward) from a container for the energy storage system, thereby being very advantageous in locating the container thereon.

It is still another object of the present invention to provide an explosion panel of an energy storage system that is capable of minimizing an influence of an internal temperature of a container for the energy storage system by an external temperature of the container, thereby keeping the energy storage system safely.

It is yet still another object of the present invention to provide an explosion panel of an energy storage system that is capable of firmly supporting a top disc to be ruptured at a predetermined high pressure, for long hours.

### Technical Solution

To accomplish the above-mentioned objects, according to the present invention, an explosion panel of an energy storage system may include a top disc having explosion lines ruptured at a predetermined high pressure. And rib flanges come into close contact with top of the top disc. The explosion panel may include a body having body flanges extending vertically outward therefrom to be supported against top of a container for the energy storage system and inner walls extending vertically downward from the body flanges to have given heights. And a lattice structure is disposed on the lower portions of the inner walls of the body, which determines the given heights of the inner walls. Moreover, an insulation member is disposed inside the inner walls and supported against the lattice structure. In this case, the insulation member is adjustable in thickness according to the changes in the given heights of the inner walls of the body.

According to the present invention, the rib flanges may come into contact with the top disc at the outsides of the explosion lines, and the body flanges may extend to the insides of the explosion lines.

According to the present invention, the inner walls of the body and the lattice structure may be made of vertically arranged plates having given heights.

### Advantageous Effects

According to the present invention, the explosion panel is configured to allow the insulation member having the corresponding thickness to the heights of the inner walls of the body to be disposed at the inside thereof. In this case, the insulation member has the corresponding thickness to the heights of the inner walls of the body, and if the heights of the inner walls of the body are adjusted, accordingly, the insulation member is adjustable in thickness. This means the insulation performance of the insulation member can be controlled, and accordingly, optimal insulation performance can be provided by appropriate designs in consideration of an external temperature on a district where the energy storage system is installed.

According to the present invention, further, the insulation member is disposed on the inner walls extending downward from the body. Under the above-mentioned configuration, the insulation member is designed to be located on the underside of the explosion panel. Even in the case where the explosion panel is located on the container for the energy storage system, it does not have any problem in exerting its insulation function.

In addition, the top disc is configured to allow the rib flanges and the body flanges to supportingly come into close contact with top and underside thereof. In this case, the rib flanges come into close contact with the top disc at the outsides of the explosion lines, and the body flanges extend to the insides of the explosion lines and come into close contact with the explosion lines. Under the above-mentioned configuration, the taped portions of the explosion lines of the top disc are maintained safely over a long period of time, thereby ensuring high durability of the explosion panel itself.

### Description of Drawings

FIG. 1 is a perspective view showing top of an explosion panel according to the present invention.
FIG. 2 is a perspective view showing underside of the explosion panel according to the present invention.
FIG. 3 is a partial sectional view showing the explosion panel according to the present invention.

### Mode for Invention

Hereinafter, an explanation of an embodiment of the present invention will be given in detail with reference to the attached drawings. An explosion panel of an energy storage system according to the present invention is disposed on an outer surface of a container for the energy storage system and has an insulation layer adapted to prevent external heat from being transferred to an interior of the container.

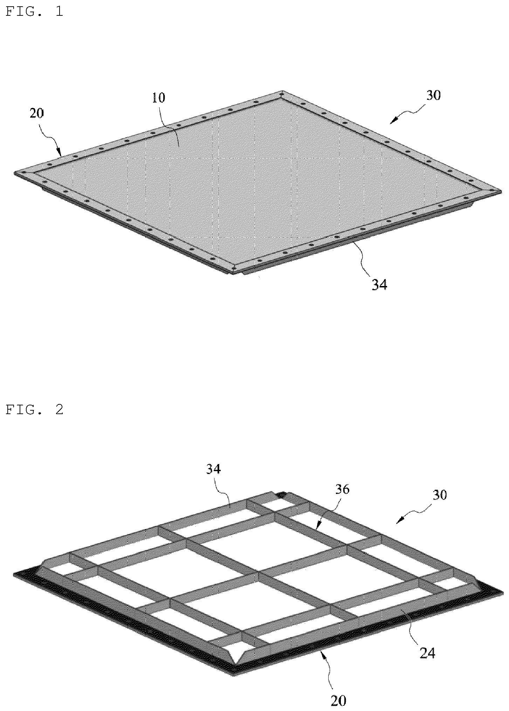

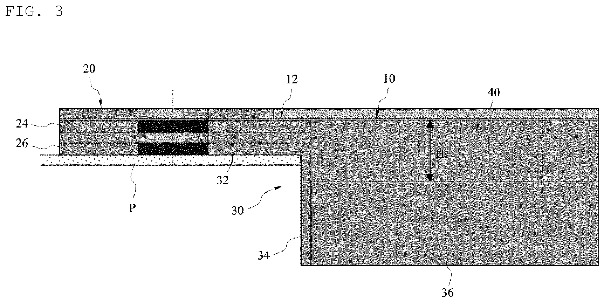

The container has a top surface with, for example, a square-shaped open portion, and the explosion panel according to the present invention is mounted on the open portion of top of the container. As shown in FIGs. 1 to 3, the explosion panel according to the present invention includes a top disc 10 ruptured at a predetermined high pressure and an insulation member 40 disposed on the underside of the top disc 10. The top disc 10 can be ruptured if the interior of the container reaches the predetermined high pressure, and as shown, the top disc 10 may have explosion lines 12.

The explosion lines 12 of the top disc 10 are machined to relatively thin thicknesses by means of mechanical machining or laser machining, and if the interior of the container reaches the predetermined high pressure, the explosion lines 12 serve to burst the top disc 10. For example, scored lines formed by means of the laser machining or mechanical machining are provided as the explosion lines 12.

The top disc 10 is fastened to rib flanges 20 and body flanges 32 located on top and underside thereof. The rib flanges 20 are disposed along the edges of top of the top disc 10, and the body flanges 32 along the edges of underside of the top disc 10. The rib flanges 20 and the body flanges 32 have the same shape as each other. As shown, however, the body flanges 32 may extend longer to the inside of the top disc 10 than the rib flanges 20.

Further, upper gaskets 24 are located between the top disc 10 and the body flanges 32 to seal the space therebetween. Desirably, the upper gaskets 24 have the same shape as the body flanges 32 when viewed on plane. In this case, the body flanges 32 are provided as the edges of top of a body 30 of the explosion panel according to the present invention.

The body 30 having a shape of a square includes inner walls 34 extending vertically downward from the insides of the body flanges 32. The inner walls 34 are molded by bending portions of the body flanges 32 downward. When viewed on the plane, the inner walls 34 provided to the square shapes are configured to allow their lower portions to be connected to a lattice structure 36.

In this case, the inner walls 34 and the lattice structure 36 may be a grating made of vertical plates. Accordingly, the inner walls 34 and the lattice structure 36 are located at lower positions of the body 30 than the body flanges 32. The body flanges 32 extending horizontally outward from the body 30 are supported against the top surface P of the container, and the inner walls 34 are supportedly inserted into the open portion of the top surface P of the container.

According to the present invention, the inner walls 34 and the lattice structure 36 serve to support the insulation member 40. To do this, the inner walls 34 have given heights H, and the insulation member 40 is insertedly located inside the inner walls 34 and supported by the lattice structure 36. The insulation member 40, which is insertedly located inside the inner walls 34 and supported by the lattice structure 36, may have the corresponding height to the heights of the inner walls 34.

As the heights H of the inner walls 34 are adjusted, accordingly, the insulation member 40 located inside the inner walls 34 may be adjusted in thickness. Further, the inner walls 34 are molded to extend downward from the body flanges 32, and the insulation member 40 does not protrude upward from the body flanges 32. In this case, the body flanges 32 are located over the top surface P of the container, and accordingly, the insulation member 40 does not protrude from the top surface P of the container, which is very advantageous in locating the container for the energy storage system thereon.

Further, the heights H of the inner walls 34 according to a district where the energy storage system is installed are adjustable, which has the same meaning as that the thickness of the insulation member 40 is adjustable according to a temperature of the district. Accordingly, the inner walls 34 constituting the explosion panel according to the present invention are adjusted in height to allow the thickness of the insulation member 40 to be adjusted, thereby controlling the insulation performance of the explosion panel.

According to the present invention, the control of the insulation performance by the adjustment of the insulation member 40 enables optimal insulation performance to be provided according to the installation place of the explosion panel. That is, the explosion panel according to the present invention can control the insulation performance from external temperatures by means of size setting or adjustment of one single part.

Next, a configuration for supporting the top disc 10 will be explained. The explosion panel according to the present invention is mounted on the open portion of the top surface P of the container. Further, lower gaskets 26 are located between the body flanges 32 and the top surface P of the container to seal the space therebetween. In this case, the rib flanges 20 and the body flanges 32 are disposed on top and underside of the top disc 10.

In this case, the rib flanges 20 are contactedly coupled to the top disc 10 at the outsides of the explosion lines 12. That is, the inner end portions of the rib flanges 20 are located at the outsides of the explosion lines 12, which enables the explosion lines 12 to be accurately ruptured at the predetermined pressure. The body flanges 32 coupled to the underside of the top disc 10 extend to the insides of the explosion lines 12.

The extension of the body flanges 32 to the insides of the explosion lines 12 means that the taped portions along the explosion lines 12 are perfectly supported against the body flanges 32. In this case, taping for sealing is performed for the undersides of the explosion lines 12, and accordingly, the body flanges 32 extend more inwardly to support the undersides of the taped portions of the explosion lines 12. Accordingly, the extension of the body flanges 32 to the insides of the explosion lines 12 enables the taped portions that may be damaged over a long period of time to be more firmly supported against the body flanges 32.

## Claims

1. An explosion panel of an energy storage system, comprising:
a top disc (10) having explosion lines (12) ruptured at a predetermined high pressure;
a body (30) having body flanges (32) extending vertically outward therefrom to be supported against a top surface of a container for the energy storage system and inner walls (34) extending vertically downward from the body flanges (32) to have given heights (H);
rib flanges (20) coming into close contact with top of the top disc (10);
a lattice structure (36) disposed on the lower portions of the inner walls (34) of the body (30); and
an insulation member (40) disposed inside the inner walls (34) and supported against the lattice structure (36),
wherein the insulation member (40) is adjustable in thickness according to the changes in the given heights (H) of the inner walls (34) of the body (30).

2. The explosion panel according to claim 1, wherein the rib flanges (20) come into contact with the top disc (10) at the outsides of the explosion lines (12), and the body flanges (32) extend to the insides of the explosion lines (12).

3. The explosion panel according to claim 1, wherein the inner walls (34) of the body (30) and the lattice structure (36) are made of vertically arranged plates having given heights.
